# EUROPEAN PATENT APPLICATION

(11) **EP 2 076 059 A2**
(43) Date of publication of application: **01.07.2009**
(21) Application number: 08172745.5
(22) Date of filing: 23.12.2008
(51) Int. Cl.: H04Q 9/00

(54) **Remote monitoring system, remote monitoring terminal and remote monitoring terminal control program**

(30) Priority: 28.12.2007 JP 2007339812
(71) Applicant: Omron Corporation, Kyoto-shi, Kyoto 600-8530 (JP)
(72) Inventor: Mukaigawa, Shinichi c/o Omron Corporation, Kyoto Kyoto 600-8530 (JP); Ueda, Tamio c/o Omron Corporation, Kyoto Kyoto 600-8530 (JP)
(74) Representative: Vossius & Partner

(57) **Abstract**

An insulation monitoring system as a remote monitoring system comprises an insulation monitoring terminal as a remote monitoring terminal that monitors a facility and a terminal management server connected to the insulation monitoring terminal via a network. The terminal management server monitors the operational status of the insulation monitoring terminal by receiving an operation verification signal transmitted from the insulation monitoring terminal. The insulation monitoring terminal includes detection unit for detecting abnormalities in a power unit, extraction unit for extracting representative values from the detection results obtained by the detection unit, and operation verification signal transmission unit for transmitting an operation verification signal including the representative values extracted by the extraction unit to the terminal management server at regular time intervals.

## Description

This invention relates to a remote monitoring system, remote monitoring terminal and remote monitoring terminal control program, more particularly to a remote monitoring system having a health check function, and remote monitoring terminal and remote monitoring terminal control program used therein.

An example of conventional remote monitoring control systems is disclosed in Japanese unexamined patent publication No. 2004-208235. The remote monitoring control system disclosed in the publication comprises an apparatus to be monitored and an operating apparatus adapted to control the operational status of the monitored apparatus.

In this remote monitoring control system, the operating apparatus and monitored apparatus transmit and receive data therebetween. Specifically, the operating apparatus sends a health check signal to the monitored apparatus at regular time intervals, while the monitored apparatus sends apparatus information to the operating apparatus in response to the health check signal.

The monitored apparatus disclosed in the publication splits a large amount of apparatus information data into several data blocks to transmit them separately. If one or some of the apparatus information data blocks are dropped, a retransmission process or other countermeasures should be taken, which makes the system more complex. In addition, an administrator has to reconstruct the received data, which is a complicated and troublesome task for the administrator.

In view of the aforementioned problems, the present invention has an object to provide a remote monitoring system, which monitors the operational status of an apparatus by using a health check, with a simple system structure and ability to provide beneficial information to an administrator, and a remote monitoring terminal and a remote monitoring terminal control program used in the system.

A remote monitoring system according to the present invention comprises a remote monitoring terminal monitoring a facility and a terminal management server connected to the remote monitoring terminal via a network, the terminal management server verifying the operational status of the remote monitoring terminal by receiving an operation verification signal from the remote monitoring terminal. The remote monitoring terminal comprises: detection unit for detecting abnormalities in the facility; extraction unit for extracting representative values from detection results obtained by the detection unit; and operation verification signal transmission unit for transmitting the operation verification signal including the representative values extracted by the extraction unit to the terminal management server at regular time intervals.

This structure allows the administrator to grasp both the operational status of the facility and abnormality in the remote monitoring terminal. Since the health check signal is added with only the representative values required for checking the facility, the data length of the health check signal becomes shorter. Consequently, at least a process for retransmitting the health check signal can be eliminated, thereby simplifying the program running on the remote monitoring terminal.

The wording "extracting representative values from detection results" in this description is not limited to mere retrieval of a specific detection result from a plurality of detection results but implies computations, summarization and other types of operations of the plurality of detection results for obtaining the representative values.

Preferably, the terminal management server comprises: storage unit for sequentially storing the representative values included in the received operation verification signal; and display unit for displaying the representative values stored in the storage unit.

More preferably, the storage unit stores information concerning an administrator associated with a remote monitoring terminal. The terminal management server further comprises: selection unit for selecting the representative values of the remote monitoring terminal associated with a specific administrator from the storage unit; and distribution unit for distributing the representative values selected by the selection unit to the associated administrator. Thus, the administrator can refer to the representative values accumulated in the terminal management server as described above, thereby allowing the administrator to properly grasp the operational status of the facility without visiting the site where the facility is installed.

Preferably, the terminal management server comprises report unit for notifying the administrator of the abnormality in the remote monitoring terminal when the terminal management server does not receive the operation verification signal from the remote monitoring terminal within a predetermined period of time. This real-time report of the abnormality in the remote monitoring terminal can urge the administrator to take appropriate measures.

In an embodiment, the representative values are a maximum value and a minimum value, obtained from the detection results within a predetermined period of time, and the times at which the maximum value and minimum value are detected.

A remote monitoring terminal according to the present invention is connected to a terminal management server via a network and transmits an operation verification signal to the terminal management server to report its own operational status. Specifically the remote monitoring terminal comprises: detection unit for detecting abnormalities in a facility; extraction unit for extracting representative values from the detection results by the detection unit; and operation verification signal transmission unit for transmitting the operation verification signal including the representative values extracted by the extraction unit to the terminal management server at regular time intervals.

A remote monitoring terminal control program, according to the present invention, enables a computer that is connected to detection unit for detecting abnormalities in a facility to operate as: extraction unit for extracting representative values from the detection results obtained by detection unit; and operation verification signal transmission unit for transmitting an operation verification signal including the representative values extracted by the extraction unit to the terminal management server at regular time intervals.

FIG. 1 is a block diagram showing a configuration of the insulation monitoring system according to an embodiment of the invention.

FIG. 2 illustrates a data structure of the terminal information DB.

FIG. 3 illustrates an exemplary representation of terminal information.

FIG. 4 is a flow chart showing a process for transmitting a health check signal.

FIG. 5 is a flow chart showing a process for monitoring the health check signal.

FIG. 6 is a flow chart showing a process for distributing terminal information.

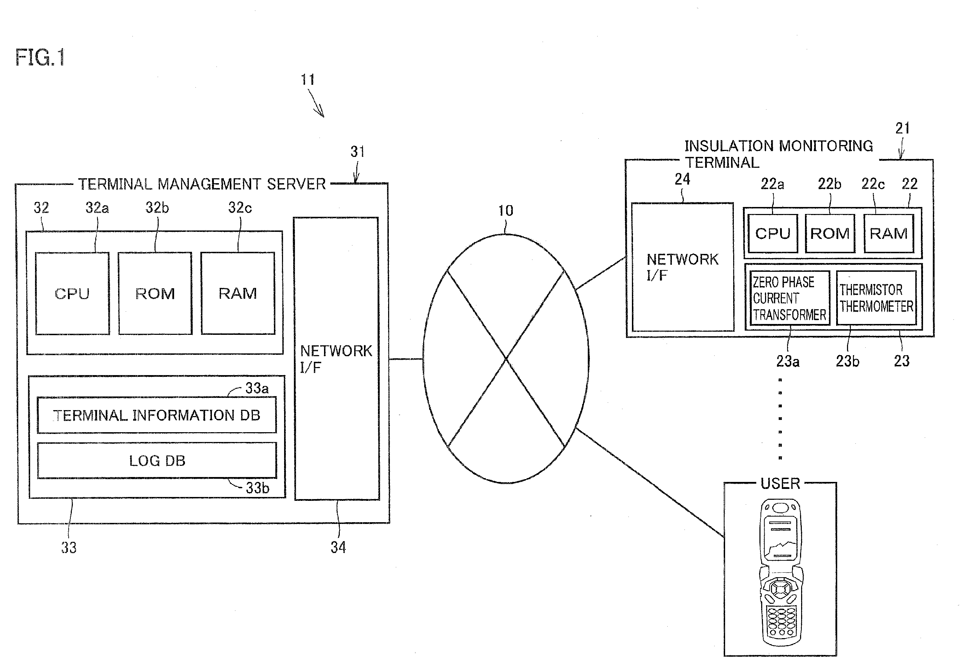

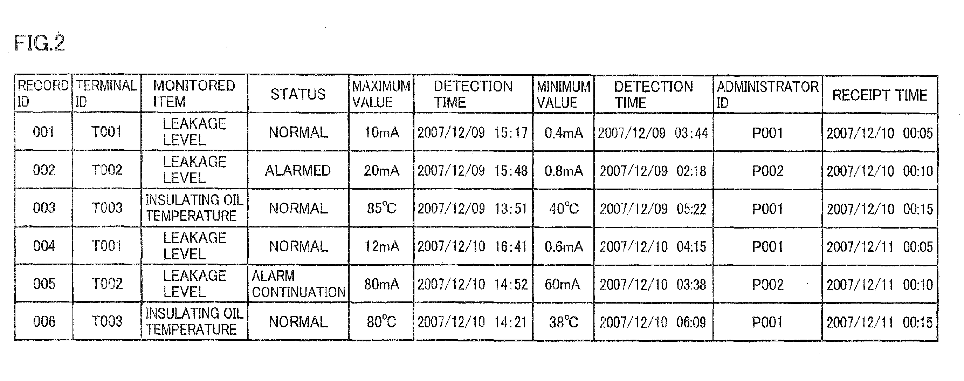

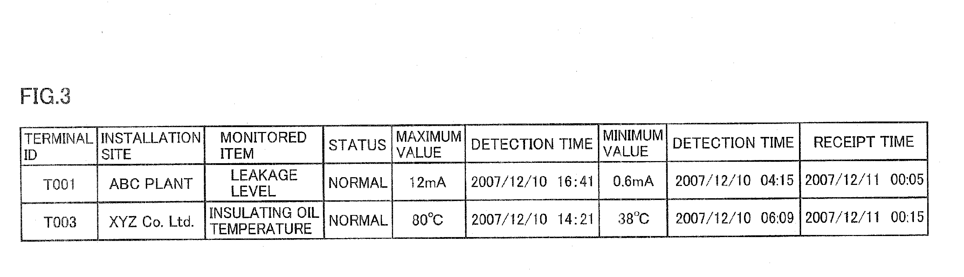

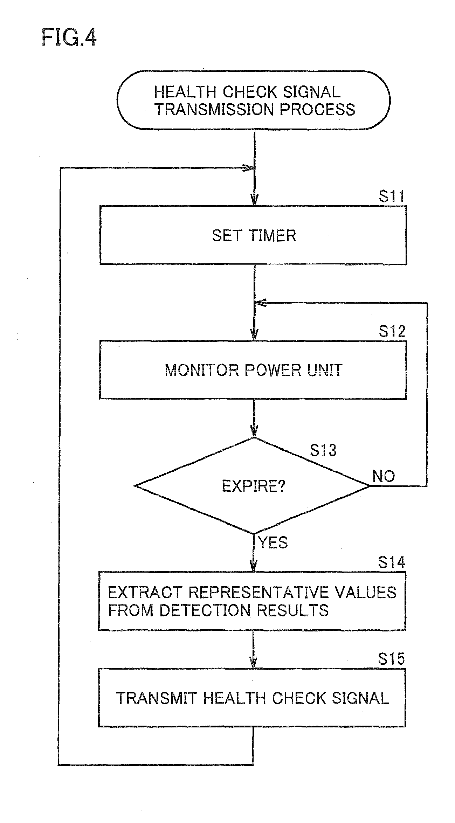

With reference to FIGS. 1 to 6, a description will be made about an insulation monitoring system 11, operating as a remote monitoring system, according to an embodiment of the present invention. FIG. 1 is a block diagram showing a configuration of the insulation monitoring system 11; FIG. 2 depicts a data structure of a terminal information DB (DataBase) 33a; FIG. 3 depicts an exemplary representation of the terminal information; and FIGS. 4 to 6 are flow charts showing operations performed by the insulation monitoring system 11.

Referring to FIG. 1, the insulation monitoring system 11 comprises an insulation monitoring terminal 21 operating as a remote monitoring terminal and a terminal management server 31 connected to the insulation monitoring terminal 21 via a network 10. The insulation monitoring terminal 21 sends an operation verification signal (hereinafter referred to as "health check signal") to the terminal management server 31 at regular time intervals. The terminal management server 31 confirms that the insulation monitoring terminal 21 is working properly based on the received health check signal.

The insulation monitoring terminal 21 includes a controller 22, a detector 23 functioning as detecting unit and a network I/F (interface) 24, and monitors a cubicle or the like (hereinafter referred to as "power unit") installed in a building. The "cubicle" is the abbreviated name for "cubicle type high voltage power receiving unit" which is a power receiving unit accommodating a full set of apparatuses, such as an apparatus for receiving high voltage power from an electrical power supplier, a transformer, a capacitor and a safety device, in a metal box.

The controller 22 includes a CPU (Central Processing Unit) 22a, a ROM (Read Only Memory) 22b in which programs and so on are stored, a RAM (Random Access Memory) 22c, which is a temporal storage area, and controls the entire insulation monitoring terminal 21. The CPU 22a operates as extraction unit and operation verification signal transmission unit by itself or with the network I/F 24.

The extraction unit extracts representative values, which are required to manage the power unit, from the detection results obtained by the detector 23. The representative values can be, for example, the maximum value and minimum value in the detection results obtained within a predetermined period of time (24 hours in this embodiment) and the detection times at which the maximum and minimum values were detected. These representative values are added to the health check signal to be transmitted to the terminal management server 31.

The operation verification signal transmission unit transmits a health check signal to the terminal management server 31 at regular time intervals. Needless to say, the health check signal includes the representative values. On the other hand, the terminal management server 31 that has received the health check signal recognizes that the insulation monitoring terminal 21, which is a transmitter of the health check signal, is working properly. The representative values added to the health check signal are sequentially stored in a terminal information DB 33a.

The detector 23 detects abnormal behavior in the target power unit and includes a zero phase current transformer (ZCT) 23a and a thermistor thermometer 23b for example. Specifically, the zero phase current transformer 23a and thermistor thermometer 23b measure the leakage current and the transformer temperature (not shown), respectively. The insulation monitoring terminal 21 can include a plurality of detectors 23 to monitor a plurality of channels simultaneously.

The network I/F 24 connected to the network 10 sends and receives data with the terminal management server 31. The network 10 is desirably a radio communication network such as a FOMA (Freedom Of Mobile multimedia Access) (registered trademark) network. Use of the radio communication network eliminates wiring between the network 10 and insulation monitoring terminal 21, which simplify installation operations for newly added insulation monitoring terminals 21.

The terminal management server 31 includes a controller 32, a storage device 33 functioning as storage unit, a network I/F 34, and is connected to the network 10 to control the insulation monitoring terminal 21. One terminal management server 31 can control a plurality of insulation monitoring terminals 21.

The controller 32 includes a CPU 32a, a ROM 32b in which programs and so on are stored, and a RAM 32c, which is a temporal storage area, and controls the entire terminal management server 31. The CPU 32a operates, by itself or with the network I/F 34, as selection unit, distribution unit, display unit and report unit.

The selection unit selects information according to any desired search criteria from the terminal information stored in the terminal information DB 33a. For example, it is possible to select only information of insulation monitoring terminals 21 associated with a specific administrator.

The distribution unit delivers the terminal information selected by the selection unit to the administrator. Specifically, the latest representative values of the insulation monitoring terminals 21 associated with a specific administrator are selected and then delivered to the administrator at regular time intervals.

The display unit displays the terminal information held by the terminal management server 31 on a screen at the user's terminal (terminal-information display process). It is also possible to narrow the terminal information to be displayed by using the selection unit. FIG. 3 shows an exemplary representation.

When the terminal management server 31 detects abnormal behavior of an insulation monitoring terminal 21, the report unit notifies the administrator of the occurrence of the abnormal event. Specifically, the absence of the health check signal to be delivered within a predetermined period causes the report unit to recognize that the insulation monitoring terminal 21 is in an abnormal condition. Communication (required by the distribution unit and report unit) with the administrator is achieved by sending email to the administrator's email address which is registered in advance, for example.

The storage device 33 includes a terminal information DB 33a, which stores diverse information relating to a target insulation monitoring terminal 21, and a log DB 33b which stores a job log of the terminal management server 31. The terminal information DB 33a sequentially stores the information specific to an insulation monitoring terminal 21 and information about the administrator associated with the insulation monitoring terminal 21 in addition to the representative values added to the health check signal.

The network I/F 34 connected to the network 10 is used to send and receive data between the insulation monitoring terminal 21 and a user. The user accesses the terminal management server 31 through his/her personal computer (PC), cellular phone and other kinds of communication equipment.

With reference to FIG. 2, a description will be made about information stored in the terminal information DB 33a. The terminal information DB 33a includes a record ID field for identifying each record, a terminal ID field for identifying each insulation monitoring terminal 21, a power-unit's monitored item field ("leakage level", "insulating oil temperature", etc.), a power-unit status field ("normal", "alarm", "alarm continuation", etc.), representative value fields (including "maximum value, minimum value and the detection times thereof"), an administrator ID field for indicating administrators associated with respective insulation monitoring terminals 21, and a time field for indicating times at which each health check signal was received, in a normalized form.

Referring to FIG. 3, an exemplary representation of the terminal information displayed by the display unit will be described. The information records shown in FIG. 3 are the latest information about the insulation monitoring terminal 21, with which the administrator having administrator ID "P001" is charged, selected from the terminal information DB 33a shown in FIG. 2. In this embodiment, a terminal installation site field is added to the fields (except for the "record ID field" and "administrator ID field") in the terminal information DB 33a. The data values of the installation site are retrieved from records associated with the terminal ID in a terminal DB (not shown).

With reference to FIGS. 2 to 6, the operations of the insulation monitoring system 11 having the above-described structure will be described.

FIG. 4 is a flow chart showing a process in which the insulation monitoring terminal 21 sends a health check signal. In step S11 of FIG. 4, the insulation monitoring terminal 21 sets a timer to monitor the start time at which the insulation monitoring terminal 21 starts the transmission process of the health check signal. In the case of transmitting the health check signal at 00:00 every day, for example, a 24-hour timer is set to start at 00:00 every day.

In step S12, the detector 23 checks the power unit and accumulates the detection results in the RAM 22c. Specifically, the zero phase current transformer 23a and thermistor thermometer 23b measure the leakage current and the transformer temperature, respectively.

In step S13, the insulation monitoring terminal 21 monitors the timer set in step S11. The checking operations by the detector 23 last until the timer expires (NO in step S13).

When the timer expires (YES in step S13), the CPU 22a, operating as extraction unit, extracts representative values from the detection results accumulated in the RAM 22c in step S14. In this embodiment, the maximum value, minimum value and the detection time thereof are taken out of the measurement results obtained within twenty four hours. These representative values are extracted from the measurement results obtained after the transmission of a health check signal and before the transmission of the subsequent health check signal.

In step S15, the CPU 22a, operating as operation verification signal transmission unit, transmits a health check signal with the representative values obtained in step S14 via the network 10 to the terminal management server 31. Subsequently, the process returns to step S11 to continue the same process.

If the insulation monitoring terminal is configured to provide a report only when an abnormal event has occurred in the power unit, determination cannot be made whether the power unit is properly working or the power unit has a trouble but the trouble has not been reported just due to a malfunction of the insulation monitoring terminal. Consequently, the administrator has to visit the site to check the power unit on a regular basis. The regularly transmitted health check signal can eliminate that task for the administrator.

The addition of the representative values, which are required to manage the power unit and extracted from the detection results, to the health check signal can shorten the data length of the health check signal. This can lighten the load on the network and eliminates the necessity to execute complex processes such as a retransmission process.

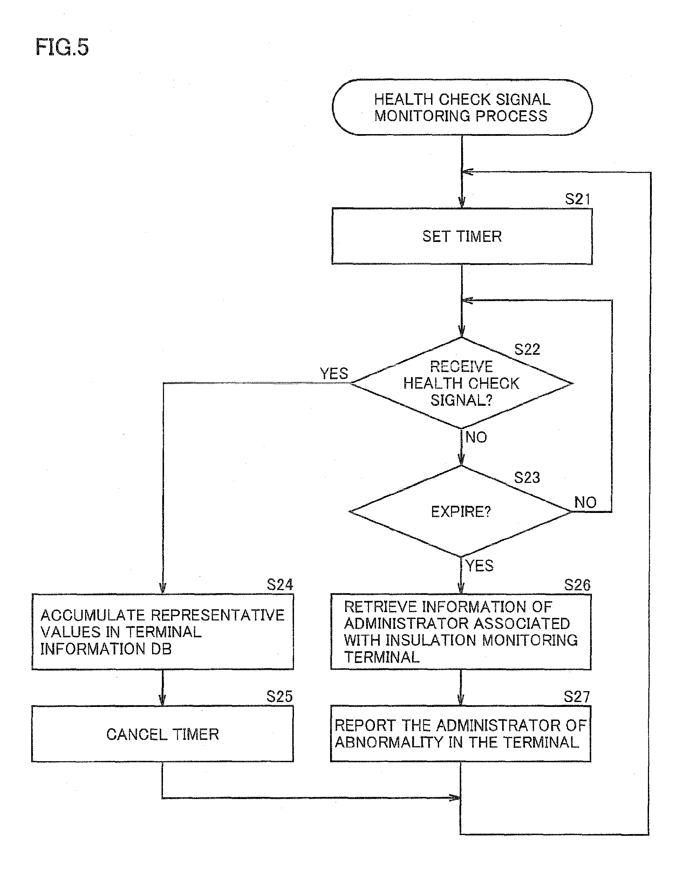

FIG. 5 is a flow chart showing a process in which the terminal management server 31 monitors the health check signal. In step S21 of FIG. 5, the terminal management server 31 sets a timer to monitor the receipt of the health check signal. This health check signal monitoring process has to be started after the transmission process of the health check signal described with FIG. 4, and therefore the 24-hour timer should be set to start at 01:00 every day, for instance.

Then, the terminal management server 31 receives the health check signal in step S22 and monitors the timer, which was set in step S21, in step S23. The monitoring operations of the health check signal (S22) last until the timer set in step S21 expires (NO in step S23).

When having received the health check signal from the insulation monitoring terminal 21 (YES in step S22), the terminal management server 31 recognizes that the insulation monitoring terminal 21, which is a transmitter of the health check signal, is working properly.

In step S24, the terminal management server 31 accumulates the representative values added to the health check signal in the terminal information DB 33a. Then, the terminal management server 31 cancels the timer, which was set in step S21, in step S25 and returns to step S21 to reset the timer to a time when a next health check signal is scheduled to arrive.

On the other hand, if the timer, which was set in step S21, expires before the terminal management server 31 receives the health check signal (YES in step S23), the terminal management server 31 recognizes that there is something wrong with the associated insulation monitoring terminal 21.

Then, in step S26, the terminal management server 31 retrieves information about the administrator associated with the insulation monitoring terminal 21, i.e., contact information such as email address, from the terminal information DB 33a. In step S27, the terminal management server 31 makes contact with the contact information obtained in step S26 for notification of the abnormality in the insulation monitoring terminal 21, and subsequently returns to step S21 to continue the same process.

The accumulation of the representative values sorted by insulation monitoring terminals 21 allows the administrator to grasp the condition of the power unit in a time series, in other words, not only the latest condition of the power unit but also the continuation of the abnormal events. Specifically, the administrator can refer to the representative values, which were obtained during the past few days and listed in a time series, of the associated insulation monitoring terminal 21, by performing a process of displaying the terminal information. Additionally, the real-time report of the abnormal behavior of the insulation monitoring terminal 21 helps the administrator take appropriate measures.

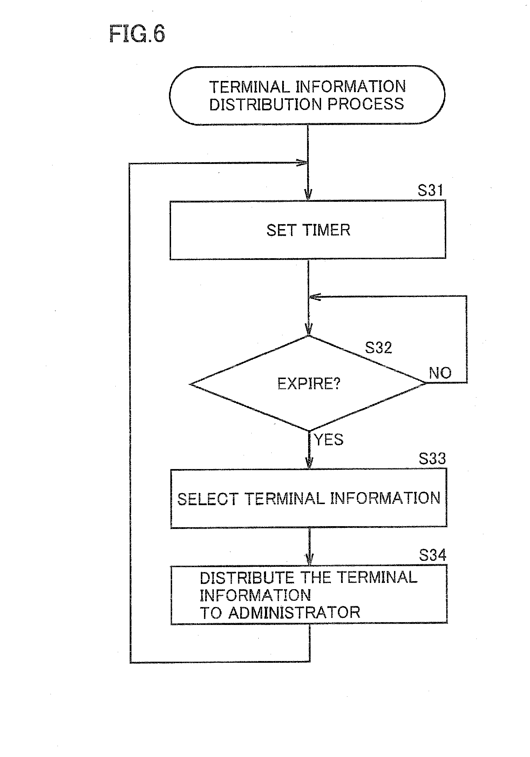

FIG. 6 is a flow chart showing a process in which the terminal management server 31 distributes the terminal information. In step S31 of FIG. 6, the terminal management server 31 sets a timer to start distribution of the terminal information. Since it is desirable to start the process of distributing the terminal information after the process of monitoring the health check signal has been complete, a 24-timer should be set to start at 08:00 every day, for instance.

In step S32, the terminal management server 31 monitors the timer set in step S31. If the timer expires (YES in step S32), the CPU 32a, operating as selection unit, selects terminal information from the terminal information DB 33a in step S33. Specifically, the latest representative values of the insulation monitoring terminal 21 associated with a specific administrator are selected.

In step S34, the CPU 32a, operating as distribution unit, delivers the selected representative values to the administrator. Specifically, an email is transmitted to the email address of the administrator registered in the terminal information DB 33a.

The above-described process for distributing the terminal information and process for displaying the terminal information (FIG. 3) can be combined to perform the following process: the email that is to be transmitted in step S34 is created so as to include only a summary of the terminal information (terminal-information distribution process), for example, "terminal ID", "status" and only link text "for more detail". The administrator who reads the email can find out whether the power unit in his/her charge is working properly or not.

If the administrator requires more details, the table shown in FIG. 3 will be displayed with the click of the link text "for more detail" (terminal-information display process). It is also possible to display details for every terminal ID. As described above, the combination of the minimum necessary information provided by the automatically delivered email and the detailed information which is obtainable when needed further increases the administrator's convenience.

It is desirable to record the processes executed by the terminal management server 31 in the log DB 33c. This helps to diagnose the cause of troubles. The processes stored in the log DB 33c can be configured to be displayed through the display unit.

Although the above-described embodiment employs a zero phase current transformer 23a and thermistor thermometer 23b to constitute a detector 23 as an example, the present invention is not limited thereto but can adopt any detection devices.

For example, the thermistor thermometer 23b can be used to measure temperatures of the inside of the power unit in addition to the transformer. Also, a pulse converter can be adopted to measure demand values (kW), a polymer resistive sensor can be used to measure humidity (%RH), and a flow meter can be adopted to measure gas flow rate (m³) or water flow rate (m³). Furthermore, the embodiment can adopt an ammeter to measure current values (A) and a voltmeter to measure voltage values (V) further to calculate the amount of electric power (kWh) with the measured values.

Although the representative values are the maximum value, minimum value and the detection times at which the maximum value and minimum value are detected as an example in the embodiment, the present invention is not limited thereto but any data available from the detection results by the detector 23 can be added to the health check signal as representative values. For instance, the total amount of electric power or the like of the power unit can be added.

While the exemplary embodiment described above sends the health check signal once in 24 hours, the present invention is not limited thereto; the health check signal can be sent at any time intervals.

Although the description has been made about the insulation monitoring system as an embodiment of a remote monitoring system, the present invention is not limited thereto but is applicable to any types of remote monitoring systems comprising a plurality of remote monitoring terminals each monitoring a specific facility and a terminal management server controlling the remote monitoring terminals. Such a remote monitoring system can be used to monitor energy, power demand, tank levels, manhole pumps and so on.

Furthermore, while the exemplary embodiment described above uses a dedicated insulation monitoring terminal 21, the present invention is not limited thereto but a general-purpose computer connected to the detector 23 can be used with a program installed to execute the same process as executed by the insulation monitoring terminal 21. In this case, the program can be supplied in the form of a recording medium such as a CD and DVD, or can be downloaded through a network.

The foregoing has described the embodiment of the present invention by referring to the drawings. However, the invention should not be limited to the illustrated embodiment. It should be appreciated that various modifications and changes can be made to the illustrated embodiment within the scope of the appended claims and their equivalents.

## Claims

1. A remote monitoring system comprising:
a remote monitoring terminal monitoring a facility; and
a terminal management server connected to said remote monitoring terminal via a network, said terminal management server verifying the operational status of said remote monitoring terminal by receiving an operation verification signal from said remote monitoring terminal, wherein
said remote monitoring terminal comprises:
detection unit for detecting abnormalities in the facility;
extraction unit for extracting representative values from detection results obtained by said detection unit; and
operation verification signal transmission unit for transmitting said operation verification signal including said representative values extracted by said extraction unit to said terminal management server at regular time intervals.

2. The remote monitoring system according to claim 1, wherein
said terminal management server comprises:
storage unit for sequentially storing said representative values included in said received operation verification signal; and
display unit for displaying said representative values stored in said storage unit.

3. The remote monitoring system according to claim 2, wherein
said storage unit stores information concerning an administrator associated with said remote monitoring terminal,
said terminal management server further comprises:
selection unit for selecting said representative values of said remote monitoring terminal associated with a specific administrator from said storage unit; and
distribution unit for distributing said representative values selected by said selection unit to the associated administrator.

4. The remote monitoring system according to any one of claims 1 to 3, wherein
said terminal management server comprises report unit for notifying the administrator of the abnormality in said remote monitoring terminal when said terminal management server does not receive said operation verification signal from said remote monitoring terminal within a predetermined period of time.

5. The remote monitoring system according to any one of claims 1 to 4, wherein
said representative values are a maximum value and a minimum value, obtained from the detection results within a predetermined period of time, and the times at which the maximum value and minimum value are detected.

6. A remote monitoring terminal connected to a terminal management server via a network and transmitting an operation verification signal to said terminal management server to report its own operational status, comprising:
detection unit for detecting abnormalities in a facility;
extraction unit for extracting representative values from the detection results by said detection unit; and
operation verification signal transmission unit for transmitting said operation verification signal including said representative values extracted by said extraction unit to said terminal management server at regular time intervals.

7. A remote monitoring terminal control program enabling a computer that is connected to detection unit for detecting abnormalities in a facility to operate as:
extraction unit for extracting representative values from the detection results obtained by said detection unit; and
operation verification signal transmission unit for transmitting an operation verification signal including said representative values extracted by said extraction unit to said terminal management server at regular time intervals.
